(19) Europäisches Patentamt
European Patent Office
Office européen des brevets

(11) **EP 3 617 696 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(51) Int Cl.:
***G01N 25/18*** (2006.01)

(21) Anmeldenummer: **19189958.2**

(22) Anmeldetag: **05.08.2019**

(54) **MESSEINRICHTUNG FÜR DIE WÄRMELEITFÄHIGKEIT EINES FLUIDS**

MEASURING DEVICE FOR THE THERMAL CONDUCTIVITY OF A FLUID

DISPOSITIF DE MESURE DE LA CONDUCTIVITÉ THERMIQUE D'UN FLUIDE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **30.08.2018 DE 102018006868**

(43) Veröffentlichungstag der Anmeldung:
**04.03.2020 Patentblatt 2020/10**

(73) Patentinhaber: **Diehl Metering GmbH**
**91522 Ansbach (DE)**

(72) Erfinder:
• **HAMMERSCHMIDT, Ulf**
**38112 Braunschweig (DE)**
• **BENKERT, Andreas**
**91522 Ansbach (DE)**
• **SOSNA, Christoph**
**90429 Nürnberg (DE)**
• **HERRMANN, Karl**
**90542 Eckental (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
DE-A1-102014 008 284    JP-A- H06 118 047
US-A1- 2013 214 274    US-B1- 6 169 965

**Beschreibung**

Die Erfindung betrifft eine Messeinrichtung zur Ermittlung der Wärmeleitfähigkeit eines Fluids, mit einem das Fluid aufnehmenden Fluidvolumen, einer Steuereinrichtung und einem in dem Fluidvolumen angeordneten Sensormodul. Daneben betrifft die Erfindung ein Verfahren zur Ermittlung der Wärmeleitfähigkeit eines Fluids.

In vielen Anwendungsfällen kann es relevant sein, die Wärmeleitfähigkeit eines Fluids, insbesondere eines Gases, zu ermitteln. Dies kann beispielsweise dazu dienen, verschiedene Fluide, insbesondere verschiedene Gase, beispielsweise verschiedene Erdgase, bzw. verschiedene Fluidzusammensetzungen in Abhängigkeit einer ermittelten Wärmeleitfähigkeit zu erkennen bzw. zu klassifizieren. Zur Ermittlung der Wärmeleitfähigkeit sind verschiedene Ansätze bekannt. Beispielsweise können zwei konzentrische Zylindermäntel genutzt werden, wobei der äußere Zylindermantel aktiv auf einer bestimmten Temperatur gehalten wird, um als thermostatisierte Wärmesenke zu dienen. Der innere Zylindermantel wird mit fester Heizleistung geheizt, um als Wärmequelle einen kontinuierlichen Wärmestrom bekannter Stärke bereitzustellen. Zwischen den beiden Zylindermänteln ist das Probegas angeordnet. Durch zwei Thermometer kann nun der Temperaturabfall zwischen den Zylindermantelflächen bestimmt werden und hieraus die Wärmeleitfähigkeit. Durch Umstellen der bekannten Formel zur Berechnung eines Wärmestroms $\Phi$ durch einen Zylindermantel mit bekannter Wärmeleitfähigkeit kann hierbei die folgende Gleichung für die Wärmeleitfähigkeit $\lambda$ angegeben werden:

$$(1) \quad \lambda = \frac{\Phi}{2\pi \cdot L(T_i - T_a)} \ln\left(\frac{r_a}{r_i}\right)$$

Hierbei ist $\Phi$ der konstante Wärmestrom, L die Länge der Zylindermantelflächen in Hochrichtung des Zylinders, $r_i$ der Radius des inneren Zylindermantels, $T_i$ die Temperatur an diesem Zylindermantel, $r_a$ der Radius des äußeren Zylindermantels und $T_a$ die Temperatur an diesem Zylindermantel.

Da das obig erläuterte Messprinzip relativ aufwändig umzusetzen sein kann, wird stattdessen häufig das sogenannte stationäre Heizdrahtprinzip genutzt, bei dem ein dünner Draht mit konstanter Leistung geheizt wird und ein von diesem beabstandeter Detektorblock als thermostatisierte Wärmesenke dient. Je nach Wärmeleitfähigkeit des zwischen dem Draht und der Wärmesenke befindlichen Fluids heizt sich der Draht unterschiedlich stark auf. Der Draht wird zusätzlich als Widerstandsthermometer genutzt, so dass seine Temperatur und in Abhängigkeit hiervon die Wärmeleitfähigkeit ermittelt werden kann. Problematisch ist hierbei, dass mit diesem Ansatz eine ausreichend hohe Messgenauigkeit typischerweise nur dann erreicht werden kann, wenn zusätzlich eine Referenzzelle genutzt wird, in der parallel wie obig erläutert die Wärmeleitfähigkeit eines Referenzgases gemessen wird und durch Vergleich der Messwerte eine Abweichung der Wärmeleitfähigkeiten von Probe- und Referenzfluid ermittelt wird.

Alternativ kann hierzu beispielsweise die Thermal-Conductivity-Sensor-Technik genutzt werden. Ein Probefluid befindet sich hierbei auf beiden Seiten einer zentralen Heizplatte, wobei beabstandet von der Heizplatte die runde oder rechteckige Messzelle durch thermostatisierte Kühlplatten angeschlossen wird. Dies können beispielsweise Siliziumplatten sein, die als passive Wärmesenken dienen. Als Maß für die Wärmeleitfähigkeit wird die elektrische Spannung ausgewertet, die zur Aufrechterhaltung einer vorgegebenen Heizplattentemperatur benötigt wird. Nachteilig an diesem Ansatz ist, dass hierbei typischerweise relativ hohe Heizplattentemperaturen und somit hohe mittlere Temperaturen des untersuchten Fluids erreicht werden. Da die Wärmeleitfähigkeit von Fluiden häufig temperaturabhängig ist, kann die häufig tatsächlich gesuchte Wärmeleitfähigkeit bei Zimmertemperatur nur abgeschätzt werden. Zudem können sehr hohe Temperaturgradienten auftreten, wodurch zumindest die Gefahr besteht, dass der tatsächliche Zusammenhang zwischen Temperaturgradient und Wärmestrom von einem linearen Zusammenhang abweicht, von dem das beschriebene Messverfahren ausgeht.

Messeinrichtungen gemäß dem Oberbegriff des Anspruchs 1 werden in den Dokumenten DE102014008284 und US2013/214274 offenbart.

Der Erfindung liegt somit die Aufgabe zugrunde, eine Möglichkeit zur Ermittlung der Wärmeleitfähigkeit eines Fluids anzugeben, die die obig beschriebenen Probleme vermeidet, wobei es insbesondere möglich sein soll, eine kleinbauende Sensorik zu nutzen und die Wärmeleitfähigkeit über einen breiten Temperaturbereich im Wesentlichen bei der aktuellen Umgebungstemperatur zu messen.

Die Aufgabe wird erfindungsgemäß durch eine Messeinrichtung der eingangs genannten Art gelöst, wobei das Sensormodul einen Tragkörper und mehrere sich frei zwischen jeweils zwei Kontaktpositionen des Tragkörpers erstreckende Sensordrähte umfasst, wobei einer der Sensordrähte als Wärmequelle dient und hierzu durch die Steuereinrichtung bestrombar ist, wobei die Steuereinrichtung dazu eingerichtet ist, über wenigstens zwei der Sensordrähte, die als Temperatursensoren dienen und unterschiedlich weit von der Wärmequelle beabstandet sind, Temperaturmesswerte zu erfassen, die von der Temperatur am jeweiligen Temperatursensor abhängen, und die Wärmeleitfähigkeit in Abhängigkeit der Temperaturmesswerte zu ermitteln, wobei der Tragkörper aus einem Isolatormaterial oder einem Halbleitermaterial, insbesondere Silizium, besteht, wobei die Sensordrähte dadurch gebildet sind, dass eine leitfähige Beschichtung, insbesondere ein Metall oder eine Metalllegierung, auf einen jeweiligen Träger aus dem gleichen Isolatormaterial oder Halbleitermaterial aufgebracht ist, der sich zwischen den jeweiligen Kontaktpunkten erstreckt.

Die erfindungsgemäße Nutzung von Sensordrähten, die sich frei, das heißt insbesondere ohne einen Kontakt zu dem Tragkörper und anderen Komponenten der Messeinrichtung, zwischen den jeweiligen Kontaktpositionen des Tragkörpers erstrecken, führt einerseits dazu, dass die Wärmequelle und die Temperatursensoren eine geringe Wärmekapazität aufweisen. Andererseits wird dadurch sichergestellt, dass die Wärmequelle und die Temperatursensoren im Wesentlichen ausschließlich über das zu messende Fluid, insbesondere ein Gas, thermisch gekoppelt sind. Die thermische Kopplung über den Tragkörper kann demgegenüber typischerweise vernachlässigt werden. Diese Faktoren führen dazu, dass sehr kurze Heizzeiten bei relativ geringer Heizleistung genutzt werden können. Beispielsweise kann eine Bestromung der Wärmequelle nur für ein Zeitintervall zwischen 10 ms und 100 ms, insbesondere zwischen 20 ms und 40 ms, beispielsweise für 40 ms, erfolgen. Die Heizleistung kann beispielsweise zwischen 3 mW und 30 mW, insbesondere ca. 10 mW, sein.

Durch die kurze Messdauer kann erreicht werden, dass im Wesentlichen keine Verfälschung der Messergebnisse durch Konvektion im Fluid auftritt. Zudem wird hierdurch erreicht, dass die Temperatur des zu untersuchenden Fluids nur geringfügig, beispielsweise nur um einige Kelvin, beispielsweise um zwischen 3 K und 6 K, über die Umgebungstemperatur angehoben wird. Dies ist einerseits vorteilhaft, da hierdurch eine Messung der Wärmeleitfähigkeit bei einer Temperatur erfolgt, die sehr nah an der Umgebungstemperatur und somit im tatsächlich typischerweise relevanten Temperaturbereich liegt. Andererseits wird durch die relativ geringe Temperaturerhöhung bzw. die relativ niedrige Temperatur der Wärmequelle erreicht, dass die Temperaturübertragung zwischen Wärmequelle und Temperatursensoren durch Strahlung vernachlässigbar ist, wodurch eine weitere Fehlerquelle bei der Ermittlung der Wärmeleitfähigkeit vermieden werden kann.

Wie im Folgenden noch detailliert erläutert werden wird, kann die Messeinrichtung, insbesondere das Sensormodul, relativ einfach aufgebaut werden und Messungen in einem großen Arbeitstemperaturbereich, beispielsweise zwischen -100 °C und 400 °C, ermöglichen. Die erfindungsgemäße Messeinrichtung kann somit in einer Vielzahl von Umgebungen mit geringen Kosten genutzt werden.

Die Sensordrähte sollen sich zwischen den Kontaktpositionen frei erstrecken, das heißt insbesondere nicht im Kontakt mit dem Tragkörper sein. Insbesondere können sie zwischen den Kontaktpositionen in ihrem gesamten Umfang, also senkrecht zur Erstreckungsrichtung, ausschließlich von dem Fluid umgeben sein. Eine solche Anordnung der Sensordrähte kann beispielsweise dadurch realisiert werden, dass der Tragkörper einen Graben, der insbesondere durch einen Ätzprozess hergestellt sein kann, aufweist, über den sich die Sensordrähte erstrecken. Die Sensordrähte können insbesondere alle in einer Ebene liegen und/oder parallel zueinander verlaufen. Vorzugsweise werden mehr als zwei der Sensordrähte als Temperatursensoren vorgesehen, beispielsweise vier, fünf oder sechs.

Da ein freiliegender Sensordraht als Wärmequelle dient, kann diese, so lange die Bestromungszeit, wie obig erläutert, nicht zu lang ist, näherungsweise als Linien- bzw. Zylinderquelle betrachtet werden. Die Temperatursensoren können insbesondere derart ausgebildet sein, dass sie eine Übertemperatur erfassen, also den Grad der Erhöhung der Temperatur bei einem Betrieb der Wärmequelle gegenüber einem Nichtbetrieb. Dies kann beispielsweise dadurch erreicht werden, dass die als Temperatursensoren dienenden Sensordrähte jeweils einen Widerstand einer Wheatstone-Brücke bilden. Wird diese Wheatstone-Brücke vor dem Bestromen der Wärmequelle abgeglichen, so dass die hieran abfallende Spannung Null ist, wird also das an sich bekannte Ausschlagverfahren genutzt, so ist die an der Wheatstone-Brücke abfallende Spannung proportional zur Temperaturänderung. Dies ermöglicht eine besonders einfache Auswertung der Temperaturmesswerte. Prinzipiell wären jedoch auch andere Ansätze zur Temperaturmesswertauswertung möglich, beispielsweise die Nutzung einer Look-up-Tabelle zur Zuordnung eines bestimmten Spannungsabfalls zu einer bestimmten Temperatur oder Ähnliches.

Zur Ermittlung der Wärmeleitfähigkeit kann, wie später noch genauer erläutert werden wird, ausgenutzt werden, dass wegen der relativ geringen erforderlichen Heizleistung aufgrund der sich frei erstreckenden Wärmequelle die Temperatur des Tragkörpers bzw. von Wänden des Fluidvolumens, anderen Komponenten der Messeinrichtung und Teilen des Fluids, die relativ weit von der Wärmequelle beabstandet sind, im Wesentlichen unverändert bleibt. Die genannten Komponenten, insbesondere der Tragkörper, wirken somit als eine Art virtuelle Wärmesenke. Dies führt dazu, dass bereits nach sehr kurzer Heizzeit von beispielsweise wenigen Millisekunden ein im Wesentlichen konstanter Wärmestrom und im Wesentlichen konstante Temperaturen im Bereich der Temperatursensoren, die, wie später noch genauer erläutert werden wird, vorzugsweise relativ nah an der Wärmequelle angeordnet sind, resultieren.

Somit könnte prinzipiell die eingangs angegebene Gleichung zur Ermittlung der Wärmeleitfähigkeit genutzt werden. Problematisch ist hierbei jedoch zunächst, dass in der erfindungsgemäßen Messeinrichtung die Wärmesenke nicht dadurch realisiert ist, dass durch eine aktive Temperierung sichergestellt wird, dass eine Wand in einem bestimmten Abstand $r_a$ von der Wärmequelle als Wärmesenke dient. Stattdessen resultiert eine effektive bzw. virtuelle Wärmesenke daraus, dass sich die Temperatur des Fluids in einem bestimmten Abstand von der Wärmequelle, insbesondere aufgrund einer Wechselwirkung mit dem Tragkörper, der eine hohe Wärmekapazität aufweist, im Wesentlichen nicht ändert.

Dieser Abstand ist jedoch sowohl von der konkreten Messgeometrie der Messeinrichtung als auch von der genutzten Heizleistung abhängig und ist daher nicht unmittelbar an den Abmessungen der Messeinrichtung zu erkennen und auch nur schwer mit ausreichender Genauigkeit theoretisch bestimmbar. Wie später noch detailliert erläutert werden wird, kann dieses Problem jedoch dadurch gelöst werden, dass in der erfindungsgemäßen Messeinrichtung mehrere Temperaturmesswerte vorliegen, so dass die Wärmeleitfähigkeit trotz des zunächst unbekannten Abstands zur virtuellen Wärmesenke ermittelt werden kann.

Wie bereits erläutert, stellt sich an den einzelnen Temperatursensoren relativ schnell nach dem Beginn der Bestromung der Wärmequelle typischerweise eine Temperatur ein, die für ein gewisses Zeitintervall konstant bleibt. Da bei der Auswertung typischerweise von einem konstanten Wärmestrom ausgegangen wird, sollte die Erfassung der Temperaturmesswerte zu einem Zeitpunkt erfolgen, in dem diese im wesentlichen konstante Temperatur vorliegt. Dies ist beispielsweise möglich, indem die Temperaturmesswerterfassung mit einer festen zeitlichen Verzögerung von beispielsweise 10 ms - 30 ms, vorzugsweise ca. 20 ms, nach Beginn der Bestromung der Wärmequelle erfolgt. Je nach konkreter Struktur der Messeinrichtung können auch längere oder kürzere Verzögerungszeiten genutzt werden. Vorzugsweise werden Temperaturmesswerte für alle Temperatursensoren gleichzeitig erfasst. Da die Temperaturen an den einzelnen Temperatursensoren, wie erläutert, jedoch für eine längere Zeit, beispielsweise für einige 10 ms, konstant bleiben, kann es auch ausreichen, die Messungen innerhalb eines Zeitintervalls von beispielsweise zwischen 1 ms und 5 ms durchzuführen. Dies kann beispielsweise vorteilhaft sein, wenn ein einziger Analog-Digital-Wandler genutzt werden soll, um alle Temperaturmesswerte zu erfassen, wobei dies durch ein Zeitmultiplexen realisiert werden kann.

Die beschriebenen Vorteile, insbesondere die geringe Heizleistung und erforderliche Bestromungszeit und Messzeit, können insbesondere erreicht werden, wenn das Sensormodul als relativ kleinbauender Chip, insbesondere als MEMS-Chip (Microelectromechanical System) ausgebildet ist. MEMS-Chips können Strukturen im Mikrometer oder sogar Submikrometerbereich ausbilden. Hierdurch können beispielsweise Abstände zwischen den Sensordrähten von einigen 10 $\mu$m oder einigen 100 $\mu$m realisiert werden.

Insbesondere können der Tragkörper und die Träger für die jeweiligen Sensordrähte einstückig ausgebildet sein. Der Tragkörper und insbesondere die einstückig mit diesem ausgebildeten Träger können als dreidimensionale Struktur durch Fertigungsschritte hergestellt werden, die im Bereich der MEMS-Chips prinzipiell bekannt sind. Beispielsweise kann eine Kombination von Lithographie und Ätzprozessen genutzt werden. Hinterschneidungen können beispielsweise durch Trockenätzen, also einen Materialabtrag durch beschleunigte Ionen oder Elektronen, realisiert werden. Die Sensordrähte können einen insbesondere durch Nass- oder Trockenätzen gebildeten Graben im Tragkörper überspannen, der insbesondere rechteckig oder trapezförmig ist. Der Abstand der Sensordrähte zum Tragkörper kann in einem Mittenbereich der Sensordrähte zwischen 50 $\mu$m und 1 mm, insbesondere zwischen 200 $\mu$m und 400 $\mu$m, beispielsweise 300 $\mu$m, sein. Dies kann beispielsweise durch eine entsprechende Grabentiefe des Grabens im Tragkörper realisiert werden.

Die leitfähige Schicht kann beispielsweise durch Nickel gebildet werden. Die Beschichtung kann ausschließlich einseitig, beispielsweise auf einer von dem Graben abgewandten Oberseite des Trägers, oder auch umlaufend um den Träger aufgebracht sein. Die leitfähige Schicht kann sich über den Bereich der Sensordrähte bzw. über die Kontaktpositionen hinaus erstrecken. Dies kann beispielsweise dazu dienen, Kontaktpads für eine elektrische Kontaktierung in einem massiveren Bereich des Tragkörpers bereitzustellen.

Die Bildung des Tragkörpers bzw. der Träger aus Halbleitermaterial kann vorteilhaft sein, da für solche Halbleitermaterialien, insbesondere für Silizium, entsprechende Ansätze zur Mikrostrukturierung wohlbekannt sind, womit bekannte Technologien zur Herstellung des Tragkörpers mit den daran angeordneten Sensordrähten genutzt werden können. Das Halbleitermaterial soll in der erfindungsgemäßen Messeinrichtung jedoch typischerweise als Isolator wirken, so dass vorzugsweise ein Halbleitermaterial mit einer Bandlücke genutzt wird, die größer ist als die Betriebsspannung der Wärmequelle bzw. der Temperatursensoren.

Der Abstand wenigstens eines der Temperatursensoren von der Wärmequelle kann kleiner als 200 $\mu$m oder kleiner als 100 $\mu$m sein und/oder der Abstand des Temperatursensors, der am weitesten von der Wärmequelle entfernt ist, von der Wärmequelle kann kleiner als 1 mm oder kleiner als 500 $\mu$m sein. Der Abstand des nähest an der Wärmequelle liegenden Temperatursensors von der Wärmequelle kann wenigstens 10 $\mu$m, wenigstens 20 $\mu$m oder wenigstens 30 $\mu$m sein. Beispielsweise kann der Abstand 50 $\mu$m sein. Der Abstand des weitest entfernten Temperatursensors von der Wärmequelle kann wenigstens 100 $\mu$m, wenigstens 200 $\mu$m oder wenigstens 300 $\mu$m sein. Beispielsweise kann der Abstand 400 $\mu$m sein. Beispielsweise können insgesamt sechs Sensordrähte genutzt werden, von denen fünf als Temperatursensor dienen. Diese können einen jeweiligen Abstand von dem als Wärmequelle dienenden Sensordraht von 50 $\mu$m, 100 $\mu$m, 200 $\mu$m, 300 $\mu$m und 400 $\mu$m aufweisen.

Die Länge der Sensordrähte bzw. der Abstand zwischen den Kontaktpunkten kann zwischen 0,5 mm und 5 mm, beispielsweise 2 mm, sein. Wie vorangehend erläutert, können die genannten relativ kleinen Abmessungen durch bekannte Methoden zur Mikrostrukturierung, insbesondere von Halbleitern, umgesetzt werden. Es ist bekannt, dass entsprechende Strukturierungsverfahren Strukturgrößen im Submikrometerbereich, insbesondere von einigen 10 nm, erreichen können.

Die Steuereinrichtung kann dazu eingerichtet sein, in Abhängigkeit der Temperaturmesswerte einen Parameter oder mehrere Parameter eines mathematischen Models zu ermitteln, das den Zusammenhang zwischen dem Abstand eines jeweiligen Temperatursensors von der Wärmequelle und dem durch diesen ermittelten Temperaturmesswert beschreibt oder das für wenigstens ein Paar der Temperatursensoren den Zusammenhang zwischen den Abständen der Temperatursensoren des jeweiligen Paares zu der Wärmequelle und einer Differenz der Temperaturen an diesen Temperatursensoren beschreibt, und die Wärmeleitfähigkeit in Abhängigkeit des Parameters oder eines der Parameter zu ermitteln. Das mathematische Modell kann durch eine Gleichung oder mehrere Gleichungen beschrieben sein, die von dem Parameter oder den Parametern abhängen. In das Modell können zudem bekannte, die Messgeometrie betreffende Parameter, beispielsweise die Länge der Sensordrähte bzw. die Abstände der Kontaktpunkte der Sensordrähte, eingehen.

Da bei kurzen Messzeiten näherungsweise davon ausgegangen werden kann, dass ein Wärmetransport durch Konvektion vernachlässigt werden kann, können auch Modelle genutzt werden, die einen Wärmetransport durch starre Körper bzw. ausschließlich aufgrund einer vorhandenen Wärmekapazität des Fluids beschreiben. Beispielsweise kann das bereits eingangs diskutierte Modell für den Wärmetransport durch Zylinderschalen genutzt werden. Hierbei kann mit guter Genauigkeit angenommen werden, dass der Wärmestrom $\Phi$ von einem Temperatursensor im Abstand $r_i$ von der Wärmequelle zu einem weiteren Temperatursensor oder der virtuellen Wärmesenke in dem Abstand $r_a$ von der Wärmequelle dem Wärmestrom zwischen Zylindermänteln mit den Radien $r_i$ und $r_a$ entspricht, die die Temperaturen $T_i$, $T_a$, aufweisen. Somit lässt sich die Wärmeleitfähigkeit $\lambda$ bei bekanntem Wärmestrom $\Phi$, bekannter Länge der Sensordrähte L und bekannten Temperaturen $T_i$ und $T_a$ für bekannte Orte mit den Abständen $r_i$ und $r_a$ mit der bereits in der Einleitung angegebenen Gleichung ermitteln:

$$(1)\ \lambda = \frac{\Phi}{2\pi \cdot L(T_i - T_a)}\ln\left(\frac{r_a}{r_i}\right).$$

Werden genau zwei Temperatursensoren genutzt, können deren Abstände $r_i$ und $r_a$ sowie die an den Temperatursensoren erfassten Temperaturen $T_i$, $T_a$ unmittelbar eingesetzt werden, um die Wärmeleitfähigkeit $\lambda$ zu ermitteln.

Die Steuereinrichtung ist vorzugsweise dazu eingerichtet, die Wärmequelle während eines Heizintervalls mit einer vorgegebenen Leistung zu bestromen und die Wärmeleitfähigkeit in Abhängigkeit der vorgegebenen Leistung zu ermitteln. Aufgrund der vorangehend diskutierten virtuellen Wärmesenke kann davon ausgegangen werden, dass eine konstante Heizleistung für ein Zeitintervall innerhalb des Heizintervalls zu einem konstanten Wärmestrom führt. Somit kann der Wärmestrom $\Phi$ in obiger Gleichung durch die Leistung P ersetzt werden, mit der die Wärmequelle bestromt wird, womit diese Gleichung für ein Paar von Temperatursensoren gelöst werden kann.

Das Modell kann wie obig erläutert den Zusammenhang zwischen dem Abstand des Temperatursensors oder der Temperatursensoren von der Wärmequelle und dem oder der durch diesen oder diese ermittelten Temperaturmesswert oder Differenz der Temperaturen in Abhängigkeit eines konstanten Wärmestroms von der Wärmequelle zu den Temperatursensoren beschreiben, wobei der Wärmestrom von der vorgegebenen Leistung abhängt.

Wie bereits erläutert, werden vorzugsweise mehr als zwei Temperatursensoren in verschiedenen Abständen von der Wärmequelle genutzt. Prinzipiell wäre es möglich, für mehrere Paare zweier ausgewählter Wärmesensoren jeweils eine vorläufige Wärmeleitfähigkeit zu ermitteln und die endgültig ermittelte Wärmeleitfähigkeit beispielsweise durch Mittelwertbildung oder durch Auswahl eines Medians aus den vorläufigen Wärmeleitfähigkeiten zu bestimmen. Vorzugsweise wird aber ein gemeinsames Modell anhand dieser Daten parametrisiert. Um dies zu erreichen, kann die obig diskutierte Gleichung zunächst wie folgt umgestellt werden:

$$(2)\ (T_i - T_a) = \frac{P}{2\pi \cdot L \cdot \lambda}\ln\left(\frac{r_a}{r_i}\right) = -k \cdot \ln(r_i) + k \cdot \ln(r_a),$$

wobei gilt:

$$(3)\ k = \frac{P}{2\pi \cdot L \cdot \lambda}.$$

Diese Gleichung definiert einen Temperaturunterschied zwischen der Temperatur $T_i$ im Abstand $r_i$ von der Wärmequelle und der Temperatur $T_a$ im Abstand $r_a$ von der Wärmequelle in Abhängigkeit der Differenz der Logarithmen

der Abstände $r_i$ und $r_a$. Der Proportionalitätsfaktor k kann bei bekannter Leistung P und Länge L der Sensordrähte unmittelbar genutzt werden, um die Wärmeleitfähigkeit zu bestimmen. Hierzu kann zunächst der Parameter k berechnet werden, indem beispielsweise ein Optimierungsproblem gelöst wird. Hierzu können für mehrere Paare der Temperatursensoren die jeweiligen Abstände $r_i$ und $r_a$ des jeweils näher an der Wärmequelle liegenden Temperatursensors und des jeweils weiter entfernt von der Wärmequelle liegenden Temperatursensors in diese Gleichung eingesetzt werden und es kann ein Maß für den Fehler der Temperaturdifferenz $(T_i - T_a)$ minimiert werden. Beispielsweise kann die Summe über die quadratischen Fehler minimiert werden.

Da, wie bereits erläutert, bei der genutzten Messgeometrie bei ausreichend kurzen Bestromungszeiten der Wärmequelle und ausreichend geringen Heizleistungen aufgrund einer vergleichsweise hohen Wärmekapazität des Tragkörpers bzw. anderer Komponenten der Messeinrichtung das Fluid in einer gewissen Entfernung von der Wärmequelle unabhängig davon, ob eine Bestromung der Wärmequelle erfolgt, weiterhin die konstante Umgebungstemperatur aufweist und somit näherungsweise als perfekte Wärmesenke dient, kann die obige Gleichung auch so modifiziert werden, dass unmittelbar ein Zusammenhang zwischen dem Abstand eines Temperatursensors von der Wärmequelle und dem durch diesen ermittelten Temperaturwert beschrieben wird. Wie bereits erläutert, beschreibt in obiger Gleichung $T_a$ allgemein eine Temperatur in dem Abstand $r_a$ von der Wärmequelle. In einem bestimmten, zunächst unbestimmten Abstand $r_a$ wirkt jedoch die virtuelle Wärmesenke, so dass die dortige Temperatur der Fluidtemperatur vor der Beheizung durch die Wärmequelle entspricht. Wird diese Temperatur als $T_a$ eingesetzt, ist die Differenz $(T_i - T_a)$, die im Folgenden als $\Delta T_i$ bezeichnet wird, jedoch genau die Übertemperatur, um die die Temperatur an dem Temperatursensor an der Position $r_i$ durch die Bestromung der Wärmequelle erhöht wurde. Wie vorangehend erläutert, können die Temperaturmesswerte, beispielsweise durch Nutzung einer vorangehend abgeglichenen Wheatstone-Brücke, derart erfasst werden, dass sie zu dieser Größe über eine bekannte Proportionalitätskonstante proportional sind bzw. dieser entsprechen. Es muss somit nicht länger die Temperaturdifferenz zwischen zwei Temperaturen betrachtet werden, sondern es kann unmittelbar der Temperaturmesswert ausgewertet werden.

Der Abstand der Wärmesenke $r_a$ ist zunächst ein freier Parameter. Zur übersichtlicheren Darstellung, wie $\lambda$ in diesem Fall ermittelt werden kann, erfolgt folgende Substitution:

$$(4)\ m = -k$$

$$(5)\ n = k \cdot \ln(r_a).$$

Somit resultiert folgende Gleichung:

$$(6)\ \Delta T_i = m \cdot \ln(r_i) + n.$$

Dies entspricht jedoch einer Geradengleichung bzw. in einem linearen Zusammenhang zwischen dem Temperaturmesswert bzw. einer unmittelbar über einen bekannten Proportionalitätsfaktor zu diesem proportionalen Größe $\Delta T_i$ und dem Logarithmus des Abstands $r_i$ des jeweiligen Temperatursensors von der Wärmequelle. Die Parameter m, n können somit dadurch berechnet werden, dass eine Ausgleichsgerade für die verschiedenen Temperaturmesswerte $T_i$ und Logarithmen der Abstände $r_i$ der Temperatursensoren bestimmt wird.

Nachdem die Parameter m bzw. k ermittelt wurden, kann die Wärmeleitfähigkeit $\lambda$ wie folgt bestimmt werden:

$$(7)\ \lambda = -\frac{P}{2\pi \cdot L \cdot m} = \frac{P}{2\pi \cdot L \cdot k}.$$

Optional kann, falls gewünscht, noch der Abstand $r_a$ der virtuellen Wärmesenke bestimmt werden:

$$(8)\ r_a = \exp\left(\frac{-n}{m}\right).$$

Der Parameter, in dessen Abhängigkeit die Wärmeleitfähigkeit ermittelt wird, also im obigen Beispiel m bzw. k, kann ein Proportionalitätsfaktor sein, der einen Zusammenhang zwischen einer von dem Abstand des Temperatursensors oder wenigstens eines der Temperatursensoren von der Wärmequelle abhängigen Funktion und dem Temperaturmesswert oder der Differenz der Temperaturen beschreibt. In dem Fall, dass k als Parameter genutzt wird, wird als Funktion der Logarithmus des Quotienten zweier Abstände bzw. die Differenz der Logarithmen der Abstände skaliert.

Die Messeinrichtung kann derart eingerichtet sein, dass der Temperaturmesswert proportional zu einer durch die Bestromung der Wärmequelle verursachten Temperaturerhöhung an dem jeweiligen Temperatursensor ist. Beispielsweise kann der Sensordraht des jeweiligen Temperatursensors ein Widerstand einer Wheatstone-Brücke sein, die nach dem Ausschlagverfahren betrieben wird. Beispielsweise kann unmittelbar vor der Bestromung der Wärmequelle die an der Wheatstone-Brücke abfallende Spannung auf Null abgeglichen werden, wonach eine an der Brücke abfallende Spannung bei einer nicht allzu starken Temperaturänderung proportional zur Temperaturänderung ist.

Neben der erfindungsgemäßen Messeinrichtung betrifft die Erfindung ein Verfahren zur Ermittlung der Wärmeleitfähigkeit eines Fluids, wobei sich das Fluid in einem Fluidvolumen befindet, in dem ein Sensormodul angeordnet ist, wobei ein Sensormodul verwendet wird, das einen Tragkörper und mehrere sich frei zwischen jeweils zwei Kontaktpositionen des Tragkörpers erstreckende Sensordrähte umfasst, wobei einer der Sensordrähte als Wärmequelle verwendet wird und hierzu durch eine Steuereinrichtung bestromt wird, wobei durch die Steuereinrichtung für wenigstens zwei der Sensordrähte, die als Temperatursensoren dienen und unterschiedlich weit von der Wärmequelle beabstandet sind, Temperaturmesswerte erfasst werden, die von der Temperatur am jeweiligen Temperatursensor abhängen, und die Wärmeleitfähigkeit in Abhängigkeit der Temperaturmesswerte ermittelt wird, wobei der Tragkörper aus einem Isolatormaterial oder einem Halbleitermaterial, insbesondere Silizium, besteht, wobei die Sensordrähte dadurch gebildet sind, dass eine leitfähige Beschichtung, insbesondere ein Metall oder eine Metalllegierung, auf einen jeweiligen Träger aus dem gleichen Isolatormaterial oder Halbleitermaterial aufgebracht ist, der sich zwischen den jeweiligen Kontaktpunkten erstreckt.

Das erfindungsgemäße Verfahren kann mit den zur erfindungsgemäßen Messeinrichtung erläuterten Merkmalen mit den dort genannten Vorteilen weitergebildet werden und umgekehrt. Insbesondere kann das erfindungsgemäße Verfahren die vorangehend beschriebenen Schritte zur Bestromung der Wärmequelle bzw. zur Erfassung der Temperaturmesswerte und/oder zur Ermittlung der Wärmeleitfähigkeit aus den Temperaturmesswerten umfassen.

Weitere Vorteile und Einzelheiten ergeben sich aus den folgenden Ausführungsbeispielen und den zugehörigen Zeichnungen. Hierbei zeigen schematisch:

Fig. 1        ein Ausführungsbeispiel einer erfindungsgemäßen Messeinrichtung, das zur Durchführung eines Ausführungsbeispiels des erfindungsgemäßen Verfahrens eingerichtet ist,

Fig. 2 und 3        Detailansichten des Sensormoduls der in Fig. 1 gezeigten Messeinrichtung, und

Fig. 4 - 6        Diagramme zur Erfassung und Verarbeitung der Temperaturmesswerte.

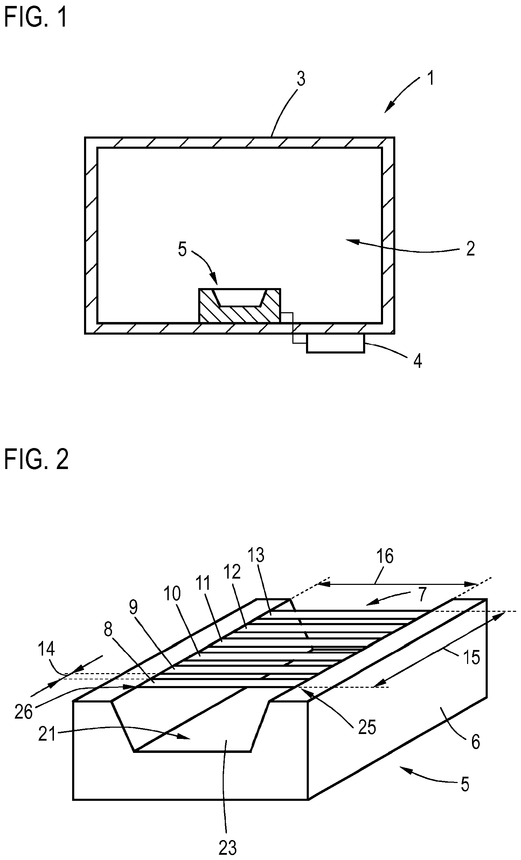

Fig. 1 zeigt eine Messeinrichtung 1 zur Ermittlung einer Wärmeleitfähigkeit eines Fluids. Das Fluid ist in einem Fluidvolumen 2 aufgenommen, das im gezeigten Beispiel durch die Wand 3 der Messeinrichtung begrenzt ist. Die Messeinrichtung 1 weist zudem eine Steuereinrichtung 4 und ein in dem Fluidvolumen 2 angeordnetes Sensormodul 5 auf.

Das Sensormodul 5 ist in Fig.1 bezüglich des Messvolumens aus Übersichtlichkeitsgründen relativ groß dargestellt. Vorzugsweise handelt es sich bei dem Sensormodul 5 jedoch um einen MEMS-Chip, der beispielsweise eine Seitenlänge von weniger als 1 mm aufweisen kann.

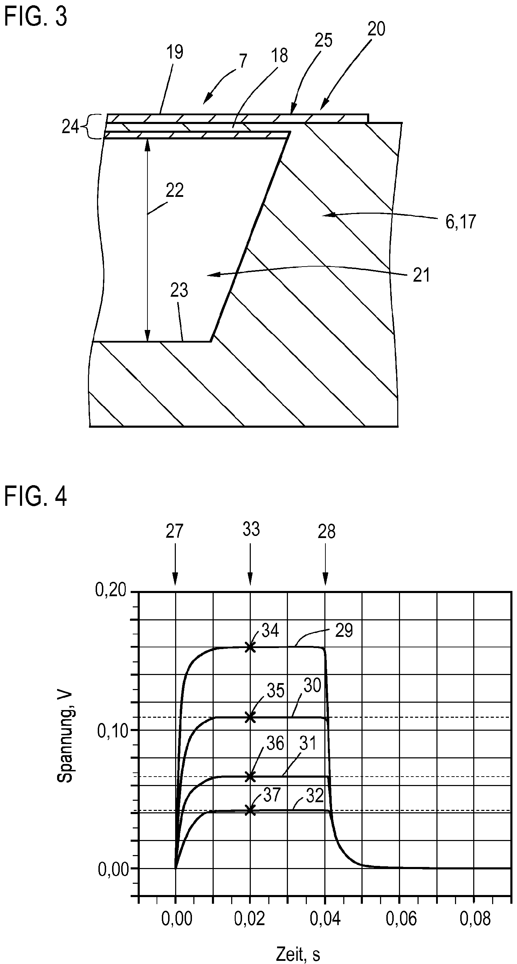

Der Aufbau des Sensormoduls 5 wird im Folgenden mit Bezug auf Fig. 2 und 3 erläutert werden. Hierbei zeigt Fig. 2 eine perspektivische Ansicht des Sensormoduls 5, wobei aus Übersichtlichkeitsgründen nur die für die folgende Beschreibung wesentlichen Bestandteile dargestellt sind und beispielsweise Verbindungsvorrichtungen zur Verbindung mit der Steuereinrichtung 4 nicht dargestellt sind. In Fig. 3 ist eine Detailansicht eines Schnitts durch das Sensormodul 5 parallel zu den Sensordrähten 7 dargestellt.

Das Sensormodul 5 umfasst einen Tragkörper 6 und mehrere sich zwischen jeweils zwei Kontaktpositionen 25, 26 des Tragkörpers 6 erstreckende Sensordrähte 7. Die Sensordrähte 7 überspannen einen trapezförmigen Graben 21 des Tragkörpers 6, der beispielsweise durch Ätzen gebildet ist. Die Sensordrähte 7 sind im Wesentlichen identisch ausgebildet, liegen alle in einer Ebene und erstrecken sich im Wesentlichen parallel zueinander. Einer der Sensordrähte 7 wird in der Messeinrichtung 1 als Wärmequelle 8 genutzt. Die Steuereinrichtung 4 kann die Wärmequelle 8 mit einer vorgegebenen Leistung bestromen, um die Temperatur des Fluids in der unmittelbaren Nachbarschaft der Wärmequelle 8 zu erhöhen.

Die weiteren Sensordrähte 7 dienen als Temperatursensoren 9 - 13 und sind in voneinander unterschiedlichen Abständen von der Wärmequelle 8 angeordnet. Der Abstand 14 des am nähesten an der Wärmequelle 8 angeordneten Temperatursensors 9 von der Wärmequelle 8 kann beispielsweise 50 $\mu$m sein. Der am weitesten der von der Wärmequelle 8 entfernteste Temperatursensor 13 kann beispielsweise einen Abstand 15 von 400 $\mu$m von der Wärmequelle 8 aufweisen. Im gezeigten Beispiel sind die Abstände der weiteren Temperatursensoren 10, 11, 12 von der Wärmequelle

8 100 μm, 200 μm und 300 μm. Die Länge 16 der Sensordrähte 7 kann einige 100 μm oder einige Millimeter sein.

Wie in Fig. 3 zu erkennen ist, sind der Tragkörper 6 und die Träger 18 der Sensordrähte 7 einstückig aus einem Isolator oder Halbleitermaterial 17, insbesondere Silizium, gebildet. Durch Lithographie- und Ätzprozesse können aus solchen Materialien Strukturen mit einer Genauigkeit im Submikrometerbereich hergestellt werden. Um eine elektrische Isolation der Sensordrähte 7 untereinander zu erreichen, sollte ein Isolator oder ein Halbleiter mit einer Bandlücke genutzt werden, die größer ist als die Betriebsspannungen der Sensordrähte 7. Eine Leitfähigkeit der einzelnen Sensordrähte 7 wird dadurch hergestellt, dass sie mit einer leitfähigen Schicht 19 versehen werden. Diese kann sich über die Kontaktpositionen 25 hinaus auf den Tragkörper 6 selbst erstrecken, um beispielsweise eine elektrische Kontaktierung in diesem Bereich 20 mit Anschlüssen der Steuereinrichtung 4 zu ermöglichen.

Die Sensordrähte 7 können eine Dicke 24 von einigen 10 μm aufweisen. Um eine ausreichende thermische Entkopplung von dem Tragkörper 6 zu erreichen, kann der Abstand 22 zu einem Boden 23 des Grabens 21 einige 100 μm, beispielsweise 300 μm, betragen.

Die als Temperatursensoren 9 - 13 dienenden Sensordrähte 7 sind über nicht dargestellte zusätzliche Widerstände als Wheatstone-Brücken verschaltet, wobei diese vor einer Bestromung der Wärmequelle 8 derart abgeglichen werden, dass im Wesentlichen keine Spannung an der jeweiligen Brücke abfällt. Hierdurch kann erreicht werden, dass eine an der jeweiligen Brücke abfallende Spannung, also ein durch den jeweiligen Temperatursensoren 9 - 13 erfasster Temperaturmesswert proportional zu einer Temperaturerhöhung ist, die durch eine Beheizung durch die Wärmequelle 8 resultiert.

Im Folgenden wird die Erfassung von Temperaturmesswerten und die Ermittlung der Wärmeleitfähigkeit aus den Temperaturmesswerten erläutert werden. Aus Übersichtlichkeitsgründen werden in den in Fig. 4 - 6 gezeigten zugehörigen Diagrammen jeweils nur Messungen der ersten vier Temperatursensoren 9 - 12 dargestellt. Fig. 4 zeigt hierbei den Verlauf der Spannungen an den Temperatursensoren 9 - 12 bzw. an den zugehörigen Wheatstone-Brücken. Zum Zeitpunkt 27 beginnt eine Bestromung der Wärmequelle 8 durch die Steuereinrichtung 4 mit einer konstanten Leistung von beispielsweise 6 mW. Zum Zeitpunkt 28 wird die Stromzufuhr unterbrochen. Als Fluid wird im gezeigten Beispiel Methan genutzt. Die Kurve 29 zeigt den Spannungsabfall am Temperatursensor 9, die Kurve 30 den Spannungsabfall am Temperatursensor 10, die Kurve 31 den Temperaturabfall am Temperatursensor 11 und die Kurve 32 den Spannungsabfall am Temperatursensor 12. Wie vorangehend erläutert, ist der Spannungsabfall proportional zu der Temperaturerhöhung gegenüber der Umgebungstemperatur vor der Beheizung durch die Wärmequelle 8.

Die Kurven 29 - 32 und somit auch die Temperaturen an den Temperatursensoren 9 - 12 steigen zunächst steil an und verharren anschließend bis zur Unterbrechung der Stromzufuhr der Wärmequelle 8 auf einer konstanten Spannung bzw. Temperatur, die jedoch für jeden der Temperatursensoren 9 - 12 unterschiedlich ist. Ein solches Verhalten wäre zu erwarten, wenn jenseits des Temperatursensors 12 eine Wärmesenke vorhanden wäre, die auf einer konstanten Temperatur gehalten wird, das heißt, die den durch die Wärmequelle 8 bereitgestellten Wärmestrom ohne Erhöhung ihrer Temperatur aufnimmt. Dieses Verhalten resultiert daraus, dass für relativ kurze Zeit und mit relativ geringer Leistung geheizt wird. Die durch den gesamten Heizpuls aufgebrachte Wärmeenergie ist somit nicht ausreichend, die Temperatur des Tragkörpers 6 bzw. anderer Komponenten der Messeinrichtung sowie von relativ weitentferntem Fluid im Gasvolumen 2 messbar zu beeinflussen. Somit resultiert eine virtuelle Wärmesenke in einer gewissen Entfernung, an der sich die Temperatur im Wesentlichen nicht ändert.

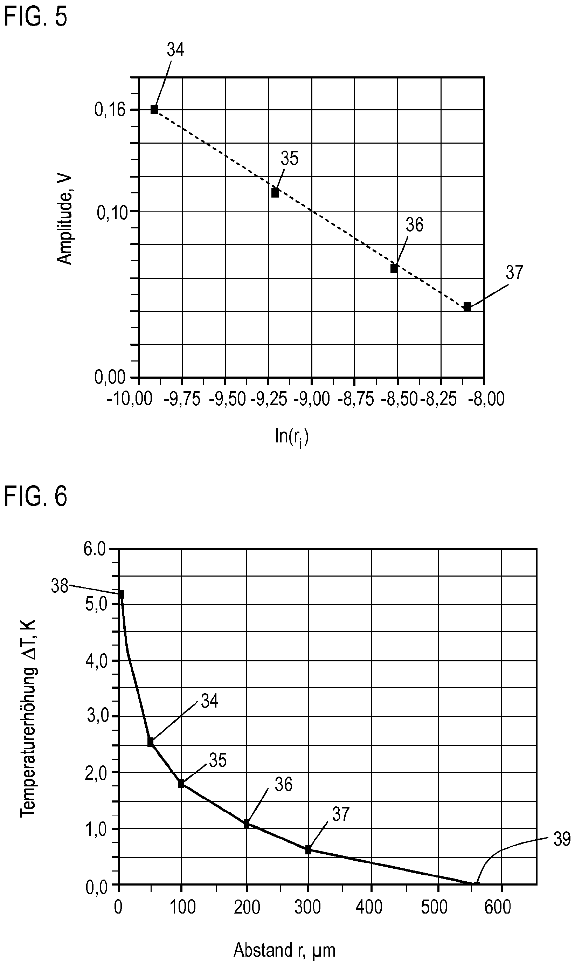

Wie bereits vorangehend erläutert, können in einem solchen Fall Parameter m, n berechnet werden, die eine Ausgleichsgerade parametrisieren, die den Zusammenhang zwischen dem Logarithmus der Entfernung $r_i$ des jeweiligen Temperatursensors 9 - 12 von der Wärmequelle 8 und dem Temperaturmesswert beschreibt. Eine solche Ausgleichsgerade ist in Fig. 5 dargestellt und wird durch die folgende bereits diskutierte Gleichung beschrieben:

$$(6) \quad \Delta T_i = m \cdot \ln(r_i) + n \,.$$

Hierbei kann die Größe $\Delta T_i$ wahlweise direkt den Temperaturunterschied angeben oder den Spannungsunterschied beschreiben. Entsprechende Temperaturmesswerte 34 - 37 werden zu dem in Fig. 4 gezeigten Zeitpunkt 33, also beispielsweise nach 20 ms, nachdem sich die Temperaturen bzw. die abfallenden Spannungen für die Temperatursensoren 9 - 12 stabilisiert haben, erfasst. Die in Fig. 5 gezeigte Ausgleichsgerade wird derart bestimmt, dass ein Maß für die Abweichung der Messpunkte 34 - 37 von dieser Gerade, beispielsweise ein quadratischer Fehler, minimiert wird. Aus der Steigung m der Gerade kann die Wärmeleitfähigkeit λ, wie bereits erläutert, wie folgt berechnet werden:

$$(9) \quad \lambda = -\frac{P}{2\pi \cdot L \cdot m} \,.$$

Das beschriebene Vorgehen ermöglicht die Bestimmung der Wärmeleitfähigkeit über ein sehr kompakt bauendes Sensormodul und mit hoher Genauigkeit. Das beschriebene Verfahren bzw. die beschriebene Messeinrichtung kann über einen breiten Bereich von Umgebungstemperaturen genutzt werden und ermittelt die Wärmeleitfähigkeit näherungsweise bei der tatsächlichen Umgebungstemperatur.

Der geringe genutzte Temperaturhub ist beispielsweise auch in Fig. 6 zu erkennen, die die anhand der in Fig. 4 und 5 gezeigten Spannungsamplituden ermittelten Temperaturerhöhungen für die Temperaturmesswerte 34 - 37 darstellt. Aus der obig beschriebenen Ausgleichsgerade lässt sich zudem der Temperaturhub 38 am Heizelement ermitteln, der wie in Fig. 6 dargestellt ist, bei dem dargestellten Beispiel bei etwas mehr als 5 K liegt. In Fig. 6 ist zudem der Punkt 39 dargestellt, der dem Abstand einer virtuellen Wärmesenke entspricht, ab dem zumindest bei nicht allzu langem Betrieb der Wärmequelle keine Erhöhung der Fluidtemperatur über die Umgebungstemperatur hinaus zu erwarten ist.

Bezugszeichenliste

| | |
|---|---|
| 1 | Messeinrichtung |
| 2 | Fluidvolumen |
| 3 | Wand |
| 4 | Steuereinrichtung |
| 5 | Sensormodul |
| 6 | Tragkörper |
| 7 | Sensordraht |
| 8 | Wärmequelle |
| 9 | Temperatursensor |
| 10 | Temperatursensor |
| 11 | Temperatursensor |
| 12 | Temperatursensor |
| 13 | Temperatursensor |
| 14 | Abstand |
| 15 | Abstand |
| 16 | Länge |
| 17 | Halbleitermaterial |
| 18 | Träger |
| 19 | Schicht |
| 20 | Bereich |
| 21 | Graben |
| 22 | Abstand |
| 23 | Boden |
| 24 | Dicke |
| 25 | Kontaktposition |
| 26 | Kontaktposition |
| 27 | Zeitpunkt |
| 28 | Zeitpunkt |
| 29 | Kurve |
| 30 | Kurve |
| 31 | Kurve |
| 32 | Kurve |
| 33 | Zeitpunkt |
| 34 | Temperaturmesswert |
| 35 | Temperaturmesswert |
| 36 | Temperaturmesswert |
| 37 | Temperaturmesswert |
| 38 | Temperaturhub |
| 39 | Punkt |

**Patentansprüche**

1. Messeinrichtung zur Ermittlung der Wärmeleitfähigkeit eines Fluides, mit einem das Fluid aufnehmenden Fluidvolumen (2), einer Steuereinrichtung (4) und einem in dem Fluidvolumen (2) angeordneten Sensormodul (5), wobei das Sensormodul (5) einen Tragkörper (6) und mehrere sich frei zwischen jeweils zwei Kontaktpositionen (25, 26) des Tragkörpers (6) erstreckende Sensordrähte (7) umfasst, wobei einer der Sensordrähte (7) als Wärmequelle (8) dient und hierzu durch die Steuereinrichtung (4) bestrombar ist, wobei die Steuereinrichtung (4) dazu eingerichtet ist über wenigstens zwei der Sensordrähte (7), die als Temperatursensoren (9 - 13) dienen und unterschiedlich weit von der Wärmequelle (8) beabstandet sind, Temperaturmesswerte (34 - 37) zu erfassen, die von der Temperatur am jeweiligen Temperatursensor (9 - 13) abhängen, und die Wärmeleitfähigkeit in Abhängigkeit der Temperaturmesswerte (34 - 37) zu ermitteln, **dadurch gekennzeichnet, dass** der Tragkörper (6) aus einem Isolatormaterial oder einem Halbleitermaterial (17), insbesondere Silizium, besteht, wobei die Sensordrähte (7) dadurch gebildet sind, dass eine leitfähige Beschichtung (19), insbesondere ein Metall oder eine Metalllegierung, auf einen jeweiligen Träger (18) aus dem gleichen Isolatormaterial oder Halbleitermaterial (17) aufgebracht ist, der sich zwischen den jeweiligen Kontaktpunkten (25, 26) erstreckt.

2. Messeinrichtung nach Anspruch 1, **dadurch gekennzeichnet, dass** der Tragkörper (6) und die Träger (18) für die jeweiligen Sensordrähte (7) einstückig ausgebildet sind.

3. Messeinrichtung nach einem der vorangehende Ansprüche, **dadurch gekennzeichnet, dass** der Abstand (14) wenigstens eines der Temperatursensoren (9) von der Wärmequelle (8) kleiner als 200 $\mu$m oder kleiner als 100 $\mu$m ist und/oder dass der Abstand des Temperatursensors (13), der am weitesten von der Wärmequelle (8) entfernt ist, von der Wärmequelle (8) kleiner als 1 mm oder kleiner als 500 $\mu$m ist.

4. Messeinrichtung nach einem der vorangehenden Ansprüche, **dadurch gekennzeichnet, dass** die Steuereinrichtung (4) dazu eingerichtet ist, in Abhängigkeit der Temperaturmesswerte (34 - 37) einen Parameter oder mehrere Parameter eines mathematischen Models zu ermitteln, das den Zusammenhang zwischen dem Abstand (14, 15) eines jeweiligen Temperatursensors (9 - 13) von der Wärmequelle (8) und dem durch diesen ermittelten Temperaturmesswert (32 - 37) beschreibt oder das für wenigstens ein Paar der Temperatursensoren (9 - 13) den Zusammenhang zwischen den Abständen (14, 15) der Temperatursensoren (9 - 13) des jeweiligen Paares zu der Wärmequelle (8) und einer Differenz der Temperaturen an diesen Temperatursensoren (9 - 13) beschreibt, und die Wärmeleitfähigkeit in Abhängigkeit des Parameters oder eines der Parameter zu ermitteln.

5. Messeinrichtung nach einem der vorangehenden Ansprüche, **dadurch gekennzeichnet, dass** die Steuereinrichtung (4) dazu eingerichtet ist, die Wärmequelle (8) während eines Heizintervalls mit einer vorgegebenen Leistung zu bestromen und die Wärmeleitfähigkeit in Abhängigkeit der vorgegebenen Leistung zu ermitteln.

6. Messeinrichtung nach Anspruch 4 und 5, **dadurch gekennzeichnet, dass** durch das Modell der Zusammenhang zwischen dem Abstand (14, 15) des Temperatursensors (9 - 13) oder der Temperatursensoren (9 - 13) von der Wärmequelle (8) und dem oder der durch diesen oder diese ermittelten Temperaturmesswert (34 - 37) oder Differenz der Temperaturen in Abhängigkeit eines konstanten Wärmestroms von der Wärmequelle (8) zu den Temperatursensoren (9 - 13) beschrieben wird, wobei der Wärmestrom von der vorgegebenen Leistung abhängt.

7. Messeinrichtung nach Anspruch 4 oder 6, **dadurch gekennzeichnet, dass** der Parameter, in Abhängigkeit dessen die Wärmeleitfähigkeit ermittelt wird, ein Proportionalitätsfaktor ist, der einen Zusammenhang zwischen einer von dem Abstand (14, 15) des Temperatursensors (9 - 13) oder wenigstens eines der Temperatursensoren (9- 13) von der Wärmequelle (8) abhängigen Funktion und dem Temperaturmesswert (34 - 37) oder der Differenz der Temperaturen beschreibt.

8. Messeinrichtung nach einem der vorangehenden Ansprüche, **dadurch gekennzeichnet, dass** die Messeinrichtung (1) derart eingerichtet ist, dass der Temperaturmesswert (32 - 34) proportional zu einer durch die Bestromung der Wärmequelle (8) verursachten Temperaturerhöhung an dem jeweiligen Temperatursensor (9 - 13) ist.

9. Verfahren zur Ermittlung der Wärmeleitfähigkeit eines Fluides, wobei sich das Fluid in einem Fluidvolumen (2) befindet, in dem ein Sensormodul (5) angeordnet ist, wobei ein Sensormodul (5) verwendet wird, das einen Tragkörper (6) und mehrere sich frei zwischen jeweils zwei Kontaktpositionen (25, 26) des Tragkörpers (6) erstreckende Sensordrähte (7) umfasst, wobei einer der Sensordrähte (7) als Wärmequelle (8) verwendet wird und hierzu durch eine Steuereinrichtung (4) bestromt wird, wobei durch die Steuereinrichtung (4) für wenigstens zwei der Sensordrähte (7), die als Temperatursensoren (9 - 13) dienen und unterschiedlich weit von der Wärmequelle (8) beabstandet sind, Temperaturmesswerte (34 - 37) erfasst werden, die von der Temperatur am jeweiligen Temperatursensor (9 -13) abhängen, und die Wärmeleitfähigkeit in Abhängigkeit der Temperaturmesswerte ermittelt wird, **dadurch gekennzeichnet, dass** der Tragkörper (6) aus einem Isolatormaterial oder einem Halbleitermaterial (17), insbesondere Silizium, besteht, wobei die Sensordrähte (7) dadurch gebildet sind, dass eine leitfähige Beschichtung (19), insbesondere ein Metall oder eine Metalllegierung, auf einen jeweiligen Träger (18) aus dem gleichen Isolatormaterial oder Halbleitermaterial (17) aufgebracht ist, der sich zwischen den jeweiligen Kontaktpunkten (25, 26) erstreckt.

## Claims

1. Measurement device for ascertaining the thermal conductivity of a fluid, having a fluid volume (2) holding the fluid, a control device (4), and a sensor module (5) arranged in the fluid volume (2), wherein the sensor module (5) comprises a supporting body (6) and a plurality of sensor wires (7) that extend freely between in each case two contact positions (25, 26) of the supporting body (6), wherein one of the sensor wires (7) serves as a heat source (8) and is able to be energized for this purpose by the control device (4), wherein the control device (4) is set up to capture (4), via at least two of the sensor wires (7) that serve as temperature sensors (9 - 13) and are arranged at different distances from the heat source (8), temperature measurement values (34 - 37) that depend on the temperature at the respective temperature sensor (9 - 13), and to ascertain the thermal conductivity in dependence on the temperature measurement values (34 - 37), **characterized in that** the supporting body (6) consists of an insulator material or a semiconductor material (17), in particular silicon, wherein the sensor wires (7) are formed by the application of a conductive coating (19), in particular a metal or a metal alloy, on a respective support (18) made from the same insulator material or semiconductor material (17) that extends between the respective contact points (25, 26).

2. Measurement device according to Claim 1, **characterized in that** the supporting body (6) and the supports (18) for the respective sensor wires (7) are embodied in one piece.

3. Measurement device according to one of the preceding claims, **characterized in that** the distance (14) of at least one of the temperature sensors (9) from the heat source (8) is less than 200 $\mu$m or less than 100 $\mu$m and/or **in that** the distance of the temperature sensor (13) that is located the furthest from the heat source (8) is less than 1 mm or less than 500 $\mu$m from the heat source (8).

4. Measurement device according to one of the preceding claims, **characterized in that** the control device (4) is set up to ascertain, in dependence on the temperature measurement values (34 - 37), a parameter or a plurality of parameters of a mathematical model that describes the relationship between the distance (14, 15) of a respective temperature sensor (9 - 13) from the heat source (8) and the temperature measurement value (32 - 37) that is ascertained thereby, or that describes, for at least one pair of the temperature sensors (9 - 13), the relationship between the distances (14, 15) of the temperature sensors (9 - 13) of the respective pair from the heat source (8) and a difference of the temperatures at said temperature sensors (9 - 13), and to ascertain the thermal conductivity in dependence on the parameter or one of the parameters.

5. Measurement device according to one of the preceding claims, **characterized in that** the control device (4) is set up to energize the heat source (8) during a heating interval with a specified power and to ascertain the thermal conductivity in dependence on the specified power.

6. Measurement device according to Claims 4 and 5, **characterized in that** the model is used to describe the relationship between the distance (14, 15) of the temperature sensor (9 - 13) or the temperature sensors (9 - 13) from the heat source (8) and the temperature measurement value (34 - 37) or difference of the temperatures ascertained by said temperature sensor or temperature sensors in dependence on a constant heat flow from the heat source (8) to the temperature sensors (9 - 13), wherein the heat flow depends on the specified power.

7. Measurement device according to Claim 4 or 6, **characterized in that** the parameter in dependence on which the thermal conductivity is ascertained is a proportionality factor that describes a relationship between a function that is dependent on the distance (14, 15) of the temperature sensor (9 - 13) or of at least one of the temperature sensors (9 - 13) from the heat source (8) and the temperature measurement value (34 - 37) or the difference of the temperatures.

8.  Measurement device according to one of the preceding claims, **characterized in that** the measurement device (1) is set up such that the temperature measurement value (32 - 34) is proportional to a temperature increase at the respective temperature sensor (9 - 13) that is caused by the energization of the heat source (8).

9.  Method for ascertaining the thermal conductivity of a fluid, wherein the fluid is located in a fluid volume (2) in which a sensor module (5) is arranged, wherein a sensor module (5) comprising a supporting body (6) and a plurality of sensor wires (7) that extend freely between in each case two contact positions (25, 26) of the supporting body (6) is used, wherein one of the sensor wires (7) is used as a heat source (8) and is energized for this purpose by a control device (4), wherein temperature measurement values (34 - 37) that depend on the temperature at the respective temperature sensor (9 - 13) are captured by the control device (4) for at least two of the sensor wires (7) that serve as temperature sensors (9 - 13) and are arranged at different distances from the heat source (8), and the thermal conductivity is ascertained in dependence on the temperature measurement values, **characterized in that** the supporting body (6) consists of an insulator material or a semiconductor material (17), in particular silicon, wherein the sensor wires (7) are formed by the application of a conductive coating (19), in particular a metal or a metal alloy, on a respective support (18) made from the same insulator material or semiconductor material (17) that extends between the respective contact points (25, 26).

**Revendications**

1.  Dispositif de mesure destiné à déterminer la conductivité thermique d'un fluide, ledit dispositif comportant un volume de fluide (2) recevant le fluide, un dispositif de commande (4) et un module de capteur (5) disposés dans le volume de fluide (2), le module de capteur (5) comprenant un corps de support (6) et une pluralité de fils de capteur (7) qui s'étendent librement entre deux positions de contact (25, 26) du corps de support (6), l'un des fils de capteur (7) servant de source de chaleur (8) et étant pour cela excité par le dispositif de commande (4), le dispositif de commande (4) étant conçu pour détecter des valeurs de mesure de température (34-37), qui dépendent de la température au niveau du capteur de température respectif (9-13), par le biais d'au moins deux des fils de capteur (7) qui servent de capteurs de température (9-13) et qui sont à des distances différentes de la source de chaleur (8), et pour déterminer la conductivité thermique en fonction des valeurs de mesure de température (34-37), **caractérisé en ce que** le corps de support (6) est en un matériau isolant ou un matériau semi-conducteur (17), en particulier en silicium, les fils de capteur (7) étant formés de telle sorte qu'un revêtement conducteur (19), en particulier un métal ou un alliage métallique, est appliqué sur un support respectif (18) qui est en le même matériau isolant ou matériau semi-conducteur (17) et qui s'étend entre les points de contact respectifs (25, 26).

2.  Dispositif de mesure selon la revendication 1, **caractérisé en ce que** le corps de support (6) et le support (18) destinés aux fils de capteur respectifs (7) sont conçus d'une seule pièce.

3.  Dispositif de mesure selon l'une des revendications précédentes, **caractérisé en ce que** la distance (14) d'au moins un des capteurs de température (9) à la source de chaleur (8) est inférieure à 200 $\mu$m ou inférieure à 100 $\mu$m et/ou **en ce que** la distance du capteur de température (13), qui est la plus éloignée de la source de chaleur (8), à la source de chaleur (8) est inférieure à 1 mm ou inférieure à 500 $\mu$m.

4.  Dispositif de mesure selon l'une des revendications précédentes, **caractérisé en ce que** le dispositif de commande (4) est conçu pour déterminer, en fonction des valeurs de mesure de température (34-37), un ou plusieurs paramètres d'un modèle mathématique qui décrit la relation entre la distance (14, 15) d'un capteur de température respectif (9-13) à la source de chaleur (8) et la valeur de mesure de température (32-37) déterminée par celui-ci, ou qui décrit, pour au moins une paire de capteurs de température (9-13)), la relation entre les distances (14, 15) des capteurs de température (9-13) de la paire respective à la source de chaleur (8) et une différence entre les températures au niveau de ces capteurs de température (9-13), et pour déterminer la conductivité thermique en fonction du paramètre ou de l'un des paramètres.

5.  Dispositif de mesure selon l'une des revendications précédentes, **caractérisé en ce que** le dispositif de commande (4) est conçu pour alimenter la source de chaleur (8) avec une puissance prédéterminée pendant un intervalle de chauffe et pour déterminer la conductivité thermique en fonction de la puissance prédéterminée.

6.  Dispositif de mesure selon les revendications 4 et 5, **caractérisé en ce que** la relation entre la distance (14, 15) du capteur de température (9-13) ou les capteurs de température (9-13) à la source de chaleur (8) et la valeur de mesure de température (34 - 37) ou la différence de température, déterminés par ledit capteur ou lesdits capteurs, est décrite en fonction d'un flux thermique constant allant de la source de chaleur (8) vers les capteurs de température (9-13), le flux thermique dépendant de la puissance spécifiée.

7. Dispositif de mesure selon la revendication 4 ou 6, **caractérisé en ce que** le paramètre en fonction duquel la conductivité thermique est déterminée est un facteur de proportionnalité qui décrit une relation entre une fonction, dépendant de la distance (14, 15) du capteur de température (9 -13) ou de l'un au moins des capteurs de température (9-13) à la source de chaleur (8), et la valeur de mesure de température (34-37) ou la différence de températures.

8. Dispositif de mesure selon l'une des revendications précédentes, **caractérisé en ce que** le dispositif de mesure (1) est conçu de telle sorte que la valeur de mesure de température (32 - 34) soit proportionnelle à une augmentation de température au niveau du capteur de température respectif (9-13) qui est provoquée par l'alimentation de la source de chaleur (8).

9. Procédé de détermination de la conductivité thermique d'un fluide, le fluide se trouvant dans un volume de fluide (2) dans lequel un module de capteur (5) est disposé, un module de capteur (5) étant utilisé qui comprend un corps de support (6) et une pluralité de fils de capteur (7) qui s'étendent librement entre deux positions de contact (25, 26) du corps de support (6), l'un des fils de capteur (7) étant utilisé comme source de chaleur (8) et étant pour cela excité par un dispositif de commande (4), des valeurs de mesure de température (34-37), qui dépendent de la température au niveau du capteur de température respectif (9-13), étant détectées par le dispositif de commande (4) pour au moins deux des fils de capteur (7) qui servent de capteurs de température (9-13) et qui sont à des distances différentes de la source de chaleur (8), et la conductivité thermique étant déterminée en fonction des valeurs de mesure de température, **caractérisé en ce que** le corps de support (6) est en un matériau isolant ou matériau semi-conducteur (17), en particulier en silicium, les fils de capteur (7) étant formés de telle sorte qu'un revêtement conducteur (19), en particulier un métal ou un alliage métallique, est appliqué sur un support respectif (18) qui est en le même matériau isolant ou matériau semi-conducteur (17) et qui s'étend entre les points de contact respectifs (25, 26).

# FIG. 1

# FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014008284

- US 2013214274 A